# EUROPÄISCHE PATENTSCHRIFT

(11) **EP 0 698 526 B1**
(45) Veröffentlichungstag und Bekanntmachung des Hinweises auf die Patenterteilung: **03.12.1997**
(21) Anmeldenummer: 94113384.5
(22) Anmeldetag: 26.08.1994
(51) Int. Cl.: B60P 3/22

(54) **Silo-Fahrzeug**
Silo vehicle
Véhicule-silo

(43) Veröffentlichungstag der Anmeldung: 28.02.1996
(73) Patentinhaber: Spitzer Silo-Fahrzeugwerke GmbH & Co. KG, D-74834 Elztal-Dallau (DE); Spitzer Eurovrac S.à.r.l., F-67640 Fegersheim (FR)
(72) Erfinder: Gantzer, Patrick, F-67490 Dettwiller (FR); Muller, H.D., Ing., NL-1700 AK Heerhugowaard (NL); Betzmeir, Helmut, Dipl.-Ing., Industriegebiet D-74834 Elztal-Dallau (DE)
(74) Vertreter: Dreiss, Fuhlendorf, Steimle & Becker, Patentanwälte

(56) Entgegenhaltungen:
- FR-A- 2 231 518
- FR-A- 2 578 308
- GB-A- 2 039 980

## Beschreibung

Die Erfindung bezieht sich auf ein Silo-Fahrzeug mit einem wenigstens einen Auslaß aufweisenden liegenden Behälter, dessen vorderes Ende um eine zur Fahrbahn vertikale geometrische Achse drehbar an einem Schleppfahrzeug gelagert und dessen vorzugsweise hinterer Behälterbereich über ein Achsaggregat an der Fahrbahn abgestützt ist. Solche Silo-Fahrzeuge sind in den verschiedensten Ausführungen quasi weltweit in Benutzung. Sie dienen vor allen Dingen dem Massentransport von festen Schüttgütern und es gibt sie in Ausführungen bis bspw. 90 m³ Fassungsvermögen. Ihre Vorteile liegen im erheblichen Rationalisierungseffekt durch Einsparung von Verpackungsmitteln, Lager- und Wiegekosten.

Abgesehen davon tragen sie zur Entlastung der Umwelt erheblich bei, weil Verpackungsmaterial entbehrlich ist. Ein Anwendungsgebiet ist bspw. die Zementproduktion oder allgemeiner die Baustoffproduktion. Dort dienen solche Silo-Fahrzeuge zum Transport aller Zementsorten Sand, Kalk, Gips und Mörtel können gleichfalls mit bestem Erfolg transportiert und an Ort und Stelle entladen werden.

Der Behälter dieses Silo-Fahrzeugs, der bei den genannten großen Mengen in aller Regel ein liegender Druckbehälter ist, wird aus Gewichtsgründen aus Aluminium hergestellt. Aluminium ist einerseits ein teurer Werkstoff und andererseits ein schwieriger zu verarbeitendes Material als bspw. Stahlblech. Normales Stahlblech kommt wegen der Rostanfälligkeit nicht in Frage. Stahlblech aus nicht rostendem Stahl ist teuer und gleichfalls schwierig zu verarbeiten.

Es liegt infolgedessen die Aufgabe vor, ein Silo-Fahrzeug der eingangs genannten Art so weiterzubilden, daß die Herstellungskosten sowie das Gewicht reduziert werden können ohne Nachteile hinsichtlich leichter Herstellbarkeit und Stabilität in Kauf nehmen zu müssen.

Zur Lösung dieser Aufgabe wird erfindungsgemäß vorgeschlagen, daß das Silo-Fahrzeug der eingangs beschriebenen Art dadurch gekennzeichnet ist, daß der Behälter aus Faserverbundwerkstoff gefertigt und in eine schalenförmige Aufnahme aus Faserverbundwerkstoff eingesetzt ist, deren vorderes Ende drehbar am Schleppfahrzeug gelagert und die auf das Achsaggregat aufsetzbar ist. Das Schleppfahrzeug ist also auch in diesem Falle ein Sattelschlepper üblicher Art, auf dessen Drehschemel o.dgl. man das in Fahrtrichtung vordere Ende der schalenförmige Aufnahme abstützt, wobei eine Drehgelenkverbindung mit vertikaler geometrischer Drehachse vorhanden ist. Der mittlere und/oder hintere Bereich der schalenförmigen Aufnahme liegt auf dem Achsaggregat auf und wird über dieses auf der Fahrbahn abgestützt. Die Achszahl des Achsaggregats richtet sich wie bei den bekannten Silo-Fahrzeugen nach dem Maximalgewicht. Silo-Fahrzeuge der genannten Art verfügen meist über drei Achsen mit vorzugsweise je zwei Rädern. Ob man das Achsaggregat dem hinteren Ende, einem mittleren Bereich oder einem dazwischen befindlichen Bereich des Behälters zuordnet, richtet sich nach der Gesamtlänge und der Nutzlast. Insofern bestehen keine Unterschiede zu den bekannten Silo-Fahrzeugen, jedoch ist es zweckmäßig die schalenförmige Aufnahme im Bereich des Achsaggregats an dieses anzupassen und/oder umgekehrt. Hierbei sollte vor allen Dingen auf die Besonderheiten des Herstellungsverfahrens und auch der Belastbarkeit von Faserverbundwerkstoffen Rücksicht genommen werden.

Die schalenförmige Aufnahme nimmt den aus gleichem oder vergleichbarem Material hergestellten Behälter auf, wobei man eine formliche Anpassung ohne weiteres vornehmen kann. Beide werden in geeigneter Weise miteinander verbunden. Als Werkstoff für die Fasern kommen die ansich bekannten Kevlarfasern (Aramidfasern) in Frage. Ansonsten ist hinsichtlich der Fasern und der Kunststoffe eine weite Variationsbreite gegeben, wobei man all die Werkstoffe verwenden kann, die sich bspw. im Bootsbau, im Öltankbau u.dgl. bewährt haben. Die Wandstärke richtet sich nach der Belastung, wobei außer der Nutzlast auch noch die Geschwindigkeit bzw. Beschleunigung des Fahrzeugs zu berücksichtigen ist, ebenso die oft schwierigen Geländebedingungen auf Baustellen. Insoweit kann man sich an den seither geltenden Werten orientieren. Dies gilt auch für die Herstellung des Behälters selbst.

Bei einer besonders bevorzugten Ausführungsform des Behälters besteht dieser aus einem schalenförmigen Oberteil und einem schalenförmigen Unterteil, wobei die Teilungsebene im Bereich des größten Horizontalquerschnitts liegt. Anders ausgedrückt ist dieser liegende Behälter etwa in einer Horizontalmittelebene geteilt, so daß man von einer oberen und unteren Hälfte sprechen kann, wobei der Begriff "Hälfte" allerdings nicht in mathematischem Sinne zu verstehen ist. Jede Schale verjüngt sich von ihrem Schalenrand aus gegen den Grund der Schale hin. Insofern ist sie leicht auszuformen. Die spezielle Form richtet sich vor allen Dingen danach, ob der Behälter in mehrere Sektionen unterteilt werden soll oder nicht. Eine solche Unterteilung ist auch beim bekannten Stand der Technik vorhanden, wobei die Sektionen allerdings nicht mittels Trennwänden gegeneinander abgeschottet sein müssen. Auch wenn solche Trennwände nicht vorgesehen sind, werden große liegende Behälter mit mehr als einem Auslauf bspw. mit zwei, drei, vier und noch mehr Ausläufen versehen, um vor allen Dingen eine vollständige Entleerung zu gewährleisten und auch ein rasches Entleeren zu ermöglichen. Insoweit werden einfach die bekannten Konstruktionen bei der Herstellung aus Aluminium auf die Fertigung mit Faserverbundwerkstoffen übertragen und materialgerecht angewendet. Man kann, wie das Ausführungsbeispiel zeigt, bspw. das Oberteil auch dann als gleichförmige, mit einem Boot vergleichbare Schale ausbilden, wenn das Unterteil dadurch eine gewisse Unterteilung erfährt, daß man zwei oder mehr Auslässe daran ausbildet.

Eine weitere Ausgestaltung der Erfindung sieht vor, daß sich die Ränder des Oberteils und des Unterteils überlappen. Auch insoweit kann man sich an bekannte Konstruktionen des Behälterbaus anlehnen. Es ist insbesondere vorgesehen, daß das Oberteil und das Unterteil innen und außen absatzlos zusammengesteckt sind, d.h. beide Teile sind angeschäftet. Man steckt sie dann bei der Montage einfach ineinander, wobei sie in einer für die Materialien geeigneten Weise fest und dicht zusammengehalten werden.

Insoweit sieht eine Weiterbildung der Erfindung vor, daß das Oberteil und das Unterteil dicht miteinander verklebt, verschweißt oder in vergleichbarer Weise verbunden sind. In erster Linie bietet sich das Verkleben, insbesondere mit 2-Komponenten-Kleber an.

Wie bereits angedeutet, kann man zur Verbesserung der Festigkeit spezielle Fasern verwenden. Es wird insbesondere vorgeschlagen, daß die Fasern des Verbundwerkstoffes gerichtet sind, wie man die bspw. bei Geweben vorfindet. Die Auslässe des Silobehälters befinden sich bei den herkömmlichen Silo-Fahrzeugen am unteren Ende jeweils eines sog. Konus. Diesbezüglich wird von der herkömmlichen Ausführung dem Prinzip nach nicht abgewichen. Die genaue Form muß aber an das neue Material des Behälters angepaßt werden. Deshalb sieht eine besonders bevorzugte Variante der Erfindung vor, daß das schalenförmige Unterteil zur Bildung sog. Konusse wenigstens einmal eingeschnürt ist, wobei jeder Konus unten eine Auslauföffnung aufweist, der je eine Auslauföffnung der schalenförmigen Aufnahme zugeordnet ist. Der Verschluß an jeder Auslauföffnung kann von herkömmlicher Ausführung sein, jedoch muß er materialgerecht befestigt werden. Man kann zu diesem Zwecke eine Verstärkung, einen Montagering o.dgl. an der Auslauföffnung des Unterteils und/oder der schalenförmigen Aufnahme vorsehen. Auf jeden Fall muß verhindert werden, daß das Material des Behälters auf irgendeine Weise in die schalenförmige Aufnahme gelangt.

Wenn hier von einer "Einschnürung" die Rede ist, so bedeutet dies im Grunde genommen nichts anderes, als daß zwei oder mehrere Konusse unmittelbar ineinander übergehen, wobei alle zusammen einen gemeinsamen oberen Rand aufweisen, der zweckmäßigerweise keine Einschnürung aufweist, sondern parallele Längsränder, die in bogenförmige Ränder vorne und hinten übergehen.

Die schalenförmige Aufnahme sollte einerseits nicht zu groß sein und andererseits den Behälter sicher aufnehmen und festhalten. Desweiteren muß sie die Belastungen beim Fahren aufnehmen. Dabei handelt es sich in erster Linie um die Belastung im Bereich des Drehschemels, aber auch des Achsaggregats. Wenn das schalenförmige Unterteil des Behälters einmal oder mehrmals unterteilt ist, also zwei oder mehrere Auslässe vorhanden sind, so muß man an jeder Einschnürung die schalenförmige Aufnahme formlich entsprechend anpassen. Dies ist auch im Hinblick auf ein ästhetisches Äußeres empfehlenswert. Insofern beschreibt Anspruch 8 eine besonders bevorzugte Ausführungsform der Erfindung. In erster Linie kommt den dort erwähnten ohrenförmigen Stützansätzen aber eine statische Aufgabe zu. Dasselbe gilt für die im Anspruch 9 aufgeführte Stützwand im Bereich jedes Ohrenpaares. Diese ist zweckmäßigerweise einstückig mit ihren Ohren hergestellt. Wenn man von den Ohren absieht, so reichen relativ niedere Seitenwände der schalenförmigen Aufnahme aus, um die festigkeitsmäßigen Anforderungen zu erfüllen. An den beiden Endbereichen sind jedoch aus nachstehend noch erläuterten und dem Fachmann ohne weiteres einleuchtenden Gründen Verstärkungen erforderlich, insbesondere im Bereich des Drehschemels.

Eine diesbezüglich bevorzugte Ausgestaltung der Erfindung ergibt sich aus Anspruch 10. Der dort erwähnte, im wesentlichen ebene Boden ermöglicht es auch, das Achsaggregat entsprechend einfach zu gestalten.

Das vordere Abschlußelement der schalenförmigen Aufnahme hat in sehr vorteilhafter Weise die Form eines Pantoffel-Vorderteils und der hochgezogene Rand ist in diesem Bereich mit längsverlaufenden Sicken, Rippen o.dgl. Verstärkungselementen versehen, damit die schalenförmige Aufnahme den Belastungen beim Fahren bzw. Schleppen in jeder Situation sicher gewachsen ist.

Entsprechendes gilt gemäß Anspruch 12 für die Ausbildung des hinteren Teils der schalenförmigen Aufnahme.

Nicht nur um die Stabilität im Bereich des Achsaggregats zu erhöhen, sondern auch um einen bei solchen Silo-Fahrzeugen dringend benötigten Stauraum, bspw. für ein Ersatzrad, Werkzeug u.dgl. zu schaffen, ist es besonders vorteilhaft, daß sich an der Unterseite des Bodens im Bereich des Achsaggregats oder vor diesem ein kastenförmiger Ansatz befindet, der auf das Achsaggregat aufgesetzt bzw. vor diesem plaziert ist. Aus Stabilitätsgründen wird der zweiten Alternativen der Vorzug gegeben. Es ist vor allen Dingen vorgesehen, daß die schalenförmige Aufnahme mit all ihren erwähnten Ansätzen u.dgl. einstückig hergestellt wird, so daß man im wesentlichen mit drei Teilen auskommt. Selbstverständlich muß man in das Innere des Behälters gelangen können. Eine dementsprechende Öffnung ist natürlich auch für das Befüllen unerläßlich. Insoweit schlägt eine weitere Variante der Erfindung vor, daß mindestens ein integriertes Mannloch oben am schalenförmigen Oberteil vorhanden ist. Wenn der Behälter in drei geschlossene oder auch ineinander übergehende Teilbehälter unterteilt ist, so ist es in Übereinstimmung mit den herkömmlichen Ausführungsformen zweckmäßig, wenn man pro Teilbehälter oder pro Konus ein Mannloch vorsieht.

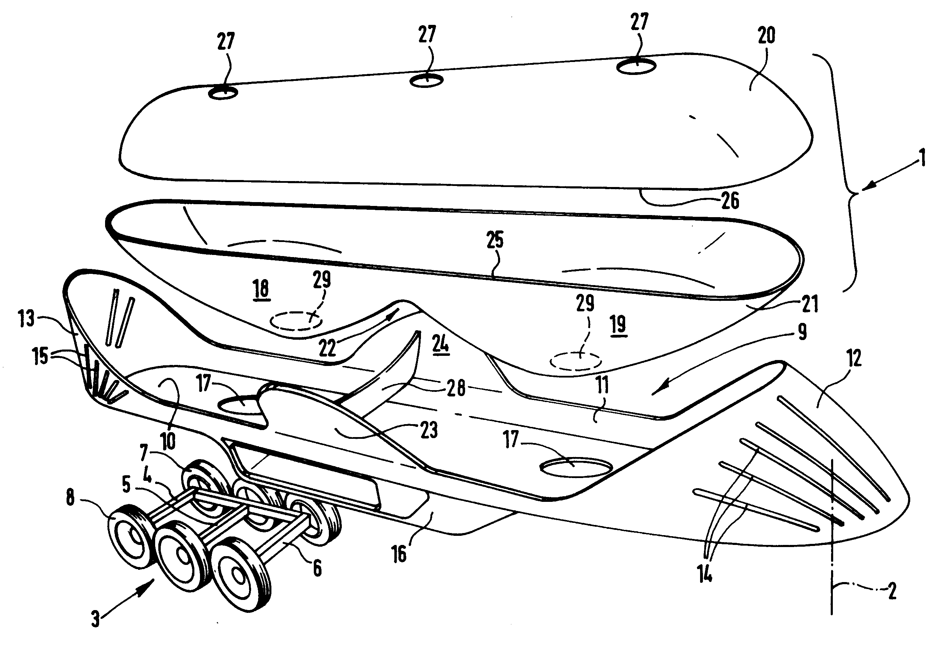

Die Erfindung wird nachstehend anhand der Zeichnung näher erläutert. Die Zeichnung zeigt ein Ausführungsbeispiel der Erfindung anhand einer perspektivischen, explosionsartigen schematischen Darstellung des Behälters des Silo-Fahrzeugs.

Das Silo-Fahrzeug besteht in bekannter Weise aus einem Schleppfahrzeug und einem gelenkig damit verbundenen Behälter. Beim Schleppfahrzeug handelt es sich in der Regel um ein zweiachsiges Fahrzeug mit Fahrerkabine. Über einen Drehschemel sind das vordere Ende des Behälters 1 und das nicht dargestellte Schleppfahrzeug gelenkig miteinander verbunden, wobei die geometrische Achse des Drehgelenks im wesentlichen in vertikaler Richtung oder senkrecht zur Fahrbahn verläuft. Sie ist in der Zeichnung schematisch dargestellt und mit 2 bezeichnet. Der hintere Bereich des Behälters 1 ist mittels eines ebenfalls nur schematisch angedeuteten Achsaggregats 3 an der Fahrbahn abgestützt. Es kann, wie beim Ausführungsbeispiel gezeigt, drei parallele Achsen 4, 5 und 6 aufweisen, wobei jede Achse mit zwei Rädern 7, 8 bestückt ist.

Der Behälter 1 ist auf dem Achsaggregat 3 nicht unmittelbar abgestützt, sondern indirekt über eine schalenförmige Aufnahme 9. Sie besteht dem Prinzip nach aus einem im wesentlichen flachen Boden 10 und einem umlaufenden Seitenrand 11. Dieser ist gemäß der Zeichnung zumindest an seinem vorderen und hinteren Ende hochgezogen. Dadurch entstehen ein vorderes und ein hinteres Abschlußelement 12 bzw. 13. Das vordere Abschlußelement kann dabei die Form eines Pantoffel-Vorderteils annehmen. Es liegt unmittelbar auf dem Drehschemel auf und kann diesen teilweise bilden. Längsverlaufende Rippen 14, Sicken o.dgl. des vorderen Abschlußelements 12 dienen zu dessen Aussteifung. Diese Verstärkung ist notwendig, weil dort beim Schleppen des Behälters die Krafteinleitung erfolgt.

Erfindungsgemäß ist sowohl die schalenförmige Aufnahme 9 als auch der Behälter 1 aus Faserverbundwerkstoff hergestellt, also aus einem armierten Kunststoff. Dieser zeichnet sich nicht nur durch eine Beständigkeit gegen das Füllgut aus, sondern auch durch eine hohe Festigkeit und ein geringes spezifisches Gewicht. Die Festigkeit liegt gegenüber derjenigen von Aluminium um etwa den Faktor 5 höher. Demgegenüber ist aber das spezifische Gewicht nur halb so groß wie dasjenige des Aluminiums. Vergleicht man die Herstellung dieses Behälters mit demjenigen des Standes der Technik, so erreicht man auf diese Weise eine Gewichtseinsparung, die in der Größenordnung von 600 bis 700 kp liegen kann. Wesentlich geringer sind auch die Herstellungskosten und die Materialkosten.

Der Boden 10 der schalenförmigen Aufnahme 9 verjüngt sich nicht nur an seinem vorderen Ende, sondern gemäß der Zeichnung auch an seinem hinteren Ende. Auch dort ist der seitliche Rand hochgezogen und mit dem Fersenteil eines Pantoffels vergleichbar. Zweckmäßigerweise befinden sich auch am hinteren Abschlußelement 13 Verstärkungselemente in Form von Rippen, Sicken 15 o.dgl., die sich analog zum vorderen Abschlußelement 12 von unten nach oben hin erstrecken. Der hintere Bereich der schalenförmigen Aufnahme 9 liegt auf einem Rahmen o.dgl. des Achsaggregats 3 auf und ist damit fest verbunden. An die Unterseite des Bodens 10 kann noch ein kastenartiger Ansatz 16 angesetzt, insbesondere einstückig angeformt sein, der sich bevorzugterweise in Vorwärtsfahrtrichtung vor dem Achsaggregat 3 befindet. Darin finden bspw. ein Ersatzrad, Werkzeug, Arbeitskleidung u.dgl. Platz. Er kann mit einer abschließbaren Klappe versehen sein. An geeigneter Stelle des Bodens 10 sind eine oder mehrere Auslaßöffnungen 17 angebracht, über welche man den Behälter 1 oder im Falle einer Unterteilung in Kammern die zugeordnete, ggf. separate Kammer entleeren kann.

Beim Ausführungsbeispiel ist der Behälter 1 mit zwei sog. Konussen 18, 19 versehen. Am unteren Ende jedes Konus befindet sich eine Behälter-Auslaßöffnung, die mit einer Auslaßöffnung 17 der schalenförmigen Aufnahme 9 korrespondiert. Ein Verschluß herkömmlicher Art erlaubt das Entleeren dieses Behälters 1 über die beiden Behälteröffnungen und die nachgeschalteten Auslaßöffnungen 17 der Aufnahme 9. Die hintere Auslaßöffnung 17 des Ausführungsbeispiels kann man so plazieren, daß das Gut zwischen dem Achsaggregat 3 und dem kastenartigen Ansatz 16 austritt. Die Unterteilung eines Behälters 1 in mehrere Konusse hat den Vorteil, daß man Schüttgut trotz der liegenden Anordnung des Behälters 1 hundertprozentig entleeren kann. Die Konuswandung muß so gewählt werden, daß sie den normalen Böschungswinkel des Schüttguts berücksichtigt.

Der Behälter 1 besteht bevorzugterweise aus zwei Teilen, nämlich dem schalenförmigen Oberteil 20 und dem ebenfalls schalenförmigen Unterteil 21. Wenn man an letzterem die erwähnten Konusse 18 und 19 oder auch weitere Konusse ausbildet, so entsteht jeweils zwischen benachbarten Konussen eine Einschnürung 22. Um auch einen solchen Behälter 1 bzw. dessen Unterteil 21 auf der schalenförmigen Aufnahme 19 einwandfrei abstützen zu können und auch für ein günstiges optisches Äußeres zu sorgen, sind bei einer einzigen Einschnürung 22 etwa im mittleren Bereich die beiden vorzugsweise parallelen Längsteile des umlaufenden Seitenrands 11 hochgezogen, so daß ein Paar ohrenförmiger Stützansätze 23 und 24 entstehen. Auf diese Weise erhält man glatte, durchgehende Längsflächen der Einheit aus Behälter 1 und Aufnahme 9, was einen aerodynamischen Vorteil und ein gefälliges Äußeres ergibt.

Der Behälter 1 bzw. dessen beide Hälften oder Teile sind gleichfalls aus Faserverbundwerkstoff hergestellt, wobei das faserverstärkte Kunststoffmaterial des Behälters und der Aufnahme 9 nicht unbedingt identisch sein müssen. Maßgeblich ist vor allen Dingen die jeweilige Belastung und ggf. auch die Resistenz gegen das Transportgut.

Der Behälter 1 ist vorzugsweise etwa in einer horizontalen Mittelebene geteilt, wobei das Oberteil und das Unterteil in streng mathematischem Sinne selbstverständlich nicht genau eine Behälterhälfte bilden müssen. Die beiden einander zugekehrten Umfangsränder 25 bzw. 26 des Unterteils 21 bzw. des Oberteils 20 haben jedoch die gleiche Form. Es ist insbesondere vorgesehen, daß die beiden Behälterhälften zusammengesteckt und miteinander dicht sowie dauerhaft verbunden sind, bspw. durch Verkleben. Deshalb sind die beiden Umfangsränder 25, 26 angeschäftet.

Das schalenförmige Oberteil 20 hat gemäß der zeichnerischen Darstellung die Form eines Bootes. Ausgehend vom Umfangsrand 25 bzw. 26 verjüngen sich die Schalen nach unten bzw. nach oben hin. Oben am schalenförmigen Oberteil 20 ist wenigstens ein Mannloch 27 angebracht. Beim Ausführungsbeispiel sind drei Mannlöcher vorgesehen. Sie können in bekannter Weise in einen kleinen Dom übergehen und mit einem Verschluß versehen sein.

Es bleibt noch nachzutragen, daß im Falle einer Einschnürung oder Konusbildung des schalenförmigen Unterteils 21 und der Ausbildung von ohrenförmigen Stützansätzen 23, 24 an der schalenförmigen Aufnahme 9 zwischen diesen Stützansätzen noch eine querverlaufende, etwa vertikal stehende Stützwand 28 angebracht, insbesondere einstückig angeformt werden kann. Sie dient vor allen Dingen der Aussteifung. Sie kann aber auch zur Lagesicherung des Behälters 1 und/oder zu dessen Befestigung herangezogen werden. Die Auslaßöffnungen des Behälters 1 bzw. des Behälter-Unterteils 21 sind mit 29 bezeichnet und sie korrespondieren wie gesagt mit den Auslaßöffnungen 17 der schalenförmigen Aufnahme 9.

## Patentansprüche

1. Silo-Fahrzeug mit einem wenigstens einen Auslauf (17, 29) aufweisenden liegenden Behälter (1), dessen vorderes Ende um eine zur Fahrbahn vertikale geometrische Achse (2) drehbar an einem Schleppfahrzeug gelagert und dessen vorzugsweise hinterer Behälterbereich über ein Achsaggregat (3) an der Fahrbahn abgestützt ist, **dadurch gekennzeichnet,** daß der Behälter (1) aus Faserverbundwerkstoff gefertigt und in eine schalenförmige Aufnahme (9) aus Faserverbundwerkstoff eingesetzt ist, deren vorderes Ende drehbar am Schleppfahrzeug gelagert und die auf das Achsaggregat aufgesetzt ist.

2. Fahrzeug nach Anspruch 1, dadurch gekennzeichnet, daß der Behälter (1) aus einem schalenförmigen Oberteil (20) und einem schalenförmigen Unterteil (21) besteht, wobei die Teilungsebene (25, 26) im Bereich des größten Horizontalquerschnitts liegt.

3. Fahrzeug nach Anspruch 2, dadurch gekennzeichnet, daß sich die Ränder (25, 26) des Behälter-Oberteils (20) und des Behälter-Unterteils (21) überlappen.

4. Fahrzeug nach Anspruch 3, dadurch gekennzeichnet, daß das Behälter-Oberteil (20) und das Behälter-Unterteil (21) innen und außen absatzlos zusammengesteckt sind.

5. Fahrzeug nach wenigstens einem der Ansprüche 2 bis 4, dadurch gekennzeichnet, daß das Behälter-Oberteil (20) und das Behälter-Unterteil (21) dicht miteinander verklebt, verschweißt oder in vergleichbarer Weise verbunden sind.

6. Fahrzeug nach wenigstens einem der Ansprüche 1 bis 5, dadurch gekennzeichnet, daß die Fasern des Faserverbundwerkstoffs gerichtet sind.

7. Fahrzeug nach wenigstens einem der Ansprüche 1 bis 6, dadurch gekennzeichnet, daß das schalenförmige Behälter-Unterteil (21) zur Bildung sog. Konusse (18, 19) wenigstens einmal eingeschnürt (22) ist, wobei jeder Konus (18, 19) unten eine Auslaßöffnung (29) aufweist, der je eine Auslaßöffnung (17) der schalenförmigen Aufnahme (9) zugeordnet ist.

8. Fahrzeug nach Anspruch 7, dadurch gekennzeichnet, daß jeder Einschnürung (22) des Behälter-Unterteils (21) ein Paar ohrenförmige Stützansätze (23, 24) der Aufnahme (9) zugeordnet sind, die an die beiden parallelen Längsrandteile des Behälter-Unterteils (21) angesetzt, insbesondere angeformt sind und sich von ihrem Längsrand (11) aus nach oben bzw. außen oben erstrecken.

9. Fahrzeug nach Anspruch 8, gekennzeichnet durch eine etwa vertikale, quer zur Längsachse der schalenförmigen Aufnahme (9) verlaufende Stützwand (28) zwischen den ohrenförmigen Ansätzen (23, 24) jedes Ansatzpaares.

10. Fahrzeug nach wenigstens einem der Ansprüche 2 bis 9, gekennzeichnet durch einen im wesentlichen ebenen Boden (10) der schalenförmigen Aufnahme (9), an dessen vorderem und hinterem Ende die Seitenränder (11) etwa bis zur Teilungsebene des Behälters (1) hochgezogen sind und vorzugsweise je ein sich zum Ende hin verjüngendes Abschlußelement (12 bzw. 13) bilden.

11. Fahrzeug nach Anspruch 10, dadurch gekennzeichnet, daß das vordere Abschlußelement (12) die Form eines Pantoffel-Vorderteils aufweist und dort der hochgezogene Rand (11) mit längsverlaufenden Sicken, Rippen (14) o.dgl. Verstärkungselementen versehen ist.

12. Fahrzeug nach Anspruch 11, dadurch gekennzeichnet, daß das hintere, sich bogenförmig verjüngende Abschlußelement (13) mit von unten nach oben verlaufenden Sicken (15), Rippen o.dgl. Verstärkungselementen versehen ist.

13. Fahrzeug nach wenigstens einem der Ansprüche 10 bis 12, dadurch gekennzeichnet, daß sich an der Unterseite des Bodens (10) der Aufnahme (9) im Bereich des Achsaggregats (3) oder vor diesem ein kastenartiger Ansatz (16) befindet, der auf das Achsaggregat (3) aufgesetzt bzw. vor diesem plaziert ist.

14. Fahrzeug nach wenigstens einem der Ansprüche 1 bis 13, gekennzeichnet durch einen modulartigen Aufbau des Achsaggregats (3).

15. Fahrzeug nach wenigstens einem der Ansprüche 2 bis 14, gekennzeichnet durch mindestens ein integriertes Mannloch (27) oben am schalenförmigen Oberteil (20) des Behälters (1).

## Claims

1. A silo vehicle with a lying container (1) which has at least one discharge (17, 29) and the front end of which is mounted on a tractor vehicle rotatably about a geometrical axis (2) that is vertical relative to the carriageway and whose preferably rear container region is supported on the carriageway by way of an axle assembly (3), characterised in that the container (1) is made from fibre composite material and is fitted into a shell-like receiving means (9) of fibre composite material, whose front end is mounted rotatably on the tractor vehicle and which is fitted on to the axle assembly.

2. A vehicle according to claim 1 characterised in that the container (1) comprises a shell-like upper portion (20) and a shell-like lower portion (21), wherein the division plane (25, 26) is in the region of the largest horizontal cross-section.

3. A vehicle according to claim 2 characterised in that the edges (25, 26) of the container upper portion (20) and the container lower portion (21) overlap each other.

4. A vehicle according to claim 3 characterised in that the container upper portion (20) and the container lower portion (21) are fitted together without a step at the inside and the outside.

5. A vehicle according to at least one of claims 2 to 4 characterised in that the container upper portion (20) and the container lower portion (21) are sealingly glued together, welded together or connected together in comparable manner.

6. A vehicle according to at least one of claims 1 to 5 characterised in that the fibres of the fibre composite material are directed.

7. A vehicle according to at least one of claims 1 to 6 characterised in that the shell-like container lower portion (21) is constricted at least once (22) to form so-called cones (18, 19), wherein each cone (18, 19) has at the bottom an outlet opening (29) with which there is associated a respective outlet opening (17) of the shell-like receiving means (9).

8. A vehicle according to claim 7 characterised in that associated with each constriction (22) of the container lower portion (21) are a pair of ear-shaped support projections (23, 24) of the receiving means (9), which are fitted, in particular moulded to the two parallel longitudinal edge parts of the container lower portion (21) and extend upwardly or outwardly upwardly from the longitudinal edge (11) thereof.

9. A vehicle according to claim 8 characterised by a substantially vertical support wall (28) extending transversely with respect to the longitudinal axis of the shell-like receiving means (9), between the ear-shaped projections (23, 24) of each pair thereof.

10. A vehicle according to at least one of claims 2 to 9 characterised by a substantially flat bottom (10) of the shell-like receiving means (9), at the front and rear ends of which the side edges (11) are extended upwardly substantially as far as the division plane of the container (1) and preferably each form a respective terminal element (12 and 13 respectively) which tapers towards the end.

11. A vehicle according to claim 10 characterised in that the front terminal element (12) is in the shape of a front part of a slipper and there the upwardly extended edge (11) is provided with longitudinally extending beads, ribs (14) or the like reinforcing elements.

12. A vehicle according to claim 11 characterised in that the rear arcuately tapering terminal element (13) is provided with upwardly extending beads (15), ribs or the like reinforcing elements.

13. A vehicle according to at least one of claims 10 to 12 characterised in that disposed at the underside of the bottom (10) of the receiving means (9) in the region of the axle assembly (3) or in front of same is a box-like projection (16) which is fitted on to or placed in front of the axle assembly (3).

14. A vehicle according to at least one of claims 1 to 13 characterised by a modular structure of the axle assembly (3).

15. A vehicle according to at least one of claims 2 to 14 characterised by at least one integrated manhole (27) at the top on the shell-like upper portion (20) of the container (1).

## Revendications

1. Véhicule-silo comportant un réservoir (1) horizontal muni d'au moins un orifice de décharge (17, 29) et dont l'extrémité avant est montée sur un véhicule tracteur de manière rotative autour d'un axe géométrique (2) perpendiculaire par rapport à la chaussée, et dont la zone, de préférence, arrière du réservoir s'appuie, par l'intermédiaire d'un mécanisme sur essieux (3), sur la chaussée, caractérisé en ce que le réservoir (1) est fabriqué en un matériau composite renforcé par des fibres et inséré dans un logement (9) en forme de coque, également réalisé en un matériau composite renforcé par des fibres, dont l'extrémité avant est montée de manière rotative sur le véhicule tracteur et qui est posé sur le mécanisme à essieux.

2. Véhicule selon la revendication 1, caractérisé en ce que le réservoir (1) est constitué d'une partie supérieure en forme de coque (20) et d'une partie inférieure en forme de coque (21), le plan de séparation (25, 26) entre ces deux parties se situant au voisinage de la section transversale horizontale la plus grande.

3. Véhicule selon la revendication 2, caractérisé en ce que les bords (25, 26) de la partie supérieure (20) et de la partie inférieure (21) du réservoir se chevauchent.

4. Véhicule selon la revendication 3, caractérisé en ce que la partie supérieure (20) et la partie inférieure (21) du réservoir sont assemblées mutuellement sans aucun débordement ni vers l'intérieur ni vers l'extérieur.

5. Véhicule selon l'une quelconque des revendications 2 à 4, caractérisé en ce que la partie supérieure (20) et la partie inférieure (21) du réservoir sont assemblées mutuellement de manière étanche par collage, soudage ou par une méthode analogue.

6. Véhicule selon au moins l'une des revendications 1 à 5, caractérisé en ce que les fibres de renfort du matériau composite sont alignées.

7. Véhicule selon au moins l'une des revendications 1 à 6, caractérisé en ce que la partie inférieure (21) du réservoir en forme de coque présente au moins un ceinturage (22) en vue de la formation de cônes (18, 19), chacun des cônes (18, 19) présentant en bas un orifice de décharge (29) auquel est associé respectivement un orifice de décharge (17) du logement (9) en forme de coque.

8. Véhicule selon la revendication 7, caractérisé en ce qu'à chaque ceinturage (22) de la partie inférieure (21) du réservoir, est associée une paire d'épaulements de renfort (23, 24) du logement (9), en forme d'oreilles, ces épaulements étant posés, voire moulés, sur les deux bords longitudinaux parallèles de la partie inférieure (21) du réservoir, et s'étendent à partir de leur bord longitudinal (11) vers le haut ou vers l'extérieur en haut.

9. Véhicule selon la revendication 8, caractérisé par la présence d'une paroi de renfort (28) sensiblement verticale, s'étendant transversalement par rapport à l'axe longitudinal du logement (9) en forme de coque, entre les épaulements (23, 24) en forme d'oreilles de chaque paire.

10. Véhicule selon l'une quelconque des revendications 2 à 9, caractérisé par la présence d'un fond sensiblement plat (10) du logement (9) en forme de coque, fond sur les extrémités avant et arrière duquel les bords latéraux (11) sont tirés vers le haut jusqu'au plan de séparation du réservoir (1), et forment de préférence chacun un élément terminal (12 et 13) qui s'amincit en direction de son extrémité.

11. Véhicule selon la revendication 10, caractérisé en ce que l'élément terminal (12) avant présente la forme de la partie avant d'une pantoufle, et que le bord (11) tiré en hauteur est muni en cet endroit de gorges longitudinales, de nervures 14 ou d'éléments de renfort analogues.

12. Véhicule selon la revendication 11, caractérisé en ce que l'élément terminal (13) arrière qui s'amincit en forme d'arc, est muni de gorges (15) s'étendant de bas en haut, de nervures ou d'éléments de renfort analogues.

13. Véhicule selon l'une quelconque des revendications 10 à 12, caractérisé en ce que sur la face inférieure du fond (10) du logement (9), dans la région du mécanisme à essieux (3) ou avant celui-ci, se trouve un élément rajouté (16) du type caisson qui est monté sur le mécanisme à essieu (3) ou placé devant celui-ci.

14. Véhicule selon l'une quelconque des revendications 1 à 13, caractérisé en ce que la construction du mécanisme à essieux (3) est modulaire.

15. Véhicule selon au moins l'une des revendications 2 à 14, caractérisé par la présence d'au moins un trou d'homme intégré (27) situé en haut sur la partie supérieure (20) en forme de coque du réservoir (1).
